# EUROPÄISCHE PATENTSCHRIFT

(11) **EP 1 264 876 B1**
(45) Veröffentlichungstag und Bekanntmachung des Hinweises auf die Patenterteilung: **09.08.2006**
(21) Anmeldenummer: 02001483.3
(22) Anmeldetag: 22.01.2002
(51) Int. Cl.: C12C 7/00, C12C 13/02, C12C 13/00, C12C 7/26, C12C 7/28

(54) **Sudhausanlage**
Brewing unit
Unité de brassage

(30) Priorität: 07.06.2001 DE 10127446; 20.07.2001 DE 10134664; 17.08.2001 DE 10139427; 09.10.2001 DE 10149644
(43) Veröffentlichungstag der Anmeldung: 11.12.2002
(73) Patentinhaber: Huppmann AG, 97318 Kitzingen (DE)
(72) Erfinder: Lenz, August jun., 97318 Kitzingen (DE); Hackensellner, Thomas, Dr., 84036 Landshut (DE); Kantelberg, Bernd, 97332 Volkach (DE); Weisenberger, Dietmar, 97440 Werneck-Essleben (DE)
(74) Vertreter: Böck, Bernhard

(56) Entgegenhaltungen:
- EP-A- 0 605 783
- WO-A-99/13050
- DD-A- 260 285
- DE-A- 3 012 591
- DE-A- 3 138 378
- DE-A- 3 614 431
- DE-A- 3 924 064
- DE-A- 19 517 928
- DE-C- 3 147 620
- DE-C- 3 504 500
- DE-C- 4 304 975
- GB-A- 730 207
- US-A- 2 091 013

## Beschreibung

Die Erfindung betrifft eine Sudhausanlage nach dem 1. Teil des Anspruchs 1.

In bekannten Sudhausanlagen wird die Würze als Zwischenprodukt der Bierherstellung gekocht, nach der Würzekochung der Heißtrub abgetrennt und anschließend bei einer Anstelltemperatur von beispielsweise circa 8°C durch Zugabe von Hefe zu Bier vergoren.

Da die Würze während der Würzekochung zur Verbesserung der technologischen Eigenschaften teilweise verdampft werden muss und nach der Würzekochung auf Anstelltemperatur heruntergekühlt wird, handelt es sich bei der Würzeherstellung um einen außerordentlich energieintensiven Prozess. Außerdem werden durch die Verbrennung fossiler Brennstoffe zur Bereitstellung der Energie und dem beim Verdampfen der Würze entstehenden Brüdendampf unerwünschte Emissionen erzeugt, die wegen erhöhter Anforderungen an die Umweltverträglichkeit derartiger Sudhausanlagen reduziert werden müssen.

Aus der DE 43 04 975 C1 ist eine Sudhausanlage bekannt, bei dem die in die Würzepfanne überströmende Würze mittels eines Wärmetauschers vorgewärmt wird. Zur Vorwärmung der Würze wird der Wärmetauscher von Heißwasser durchströmt, dass mittels eines Energierückgewinnungssystems durch Rückgewinnung von Prozesswärme auf eine Temperatur von 99°C aufgeheizt wird. Aufgrund dieser relativ niedrigen Temperatur des zur Vorwärmung eingesetzten Heißwassers, kann die Würze nur auf eine Vorwärmtemperatur von 99°C aufgeheizt werden, so dass es beim nachfolgenden Würzekochen zu Beginn des Kochprozesses zum Pulsieren der Würze kommen kann. Ein der Würzepfanne nachgeordneter Wärmetauscher dient der Rückgewinnung von in der gekochten Würze enthaltener Prozesswärme.

Aus dem Aufsatz "Energie- und strömungstechnische Betrachtungen zur Aufheizung und Kochung von Bierwürze" in der Fachzeitschrift Brauwelt 46/47 (1998), S. 2282 bis 2288 ist eine Würzepfanne mit Innenkocher bekannt, bei dem der Würzepfanne ein Wärmetauscher zur Vorheizung der Würze vorgeschaltet ist. Der Wärmetauscher kann dabei mit Frischdampf oder Heißwasser beheizt werden.

Ausgehend vom bekannten Stand der Technik ist es Aufgabe der vorliegenden Erfindung, eine neue Sudhausanlage vorzuschlagen, mit der die technologischen Eigenschaften des herzustellenden Biers verbessert, die bei der Würzebereitung anfallenden Emissionen reduziert und der erforderliche Energieeinsatz optimiert wird.

Diese Aufgabe wird durch eine Sudhausanlage nach der Lehre des unabhängigen Anspruchs 1 gelöst.

Vorteilhafte Ausführungsformen der Erfindung sind Gegenstand der abhängigen Ansprüche 2-9,

Die Erfindung betrifft das Aufheizen der Würze unter Verwendung einer Naturumlaufströmung. Gemäß der Erfindung wird die Würze dabei auf eine Vorwärmtemperatur aufgeheizt, die maximal 1 bis 2°C, unterhalb der Siedetemperatur der Würze liegt. Das heißt, die Würze wird durch entsprechende Vorwärmung schon vor dem Einströmen in die Würzekocheinrichtung so stark aufgeheizt, dass die Temperaturdifferenz bis zum Erreichen des Siedepunkts der Würze mit der damit verbundenen gewünschten Blasenbildung relativ klein ist. Im Ergebnis kann dadurch erreicht werden, dass die Würze in der Würzekocheinrichtung nur sehr kurz bis zum bereichsweisen Erreichen des Siedepunktes und der damit verbundenen stärkeren Naturumlaufströmung aufgeheizt werden muss. Die beim Aufheizen der Würze in der Würzekocheinrichtung mit Naturumlaufströmung bekannten negativen Effekte, insbesondere das Pulsieren der Würze während des Aufheizens, kann dadurch erheblich verringert werden. Insgesamt können also anders als bei bekannten Vorwärmverfahren, die allein der Prozesswärmerückgewinnung dienen, durch die erfindungsgemäße Vorwärmung auch Verbesserungen der Würzequalität erreicht werden.

Grundsätzlich sollte bei der Vorwärmung die in der Würze zur Anhebung auf die gewünschte Vorwärmtemperatur erforderliche Wärme in einer möglichst kurzer Aufheizzeit eingekoppelt werden, da eine kurze Beheizung die Würzequalität in der Tendenz verbessert. Die Heizleistung im Wärmetauscher ist dazu entsprechend ausreichend hoch zu wählen.

Eine besonders schonende Vorwärmung der Würze kann dadurch gewährleistet werden, dass die Würze, beispielsweise durch Verwendung eines geeigneten Wärmetauschers, im Durchlauf vorgewärmt wird. Dazu eignen sich insbesondere Freistromplatten-Wärmetauscher, da diese Bauart relativ große Strömungsquerschnitte aufweist, so dass die auf die Würze wirkende Scherbelastung relativ gering ist.

Eine bessere Prozesswärmenutzung wird erfindungsgemäß dadurch erreicht, dass zumindest zwei Wärmetauscher zur Erwärmung des Wärmeträgers hintereinander geschaltet werden. Falls die Einspeisung von Wärme gewünscht wird, die aus der bei der Würzekochung entstehenden Abwärme rückgewonnen wird, kann das dort vorgewärmte Wasser in einem zweiten vorgeschalteten Wärmetauscher mittels eines Wärmeträgers ausreichend hoher Energiedichte, beispielsweise Dampf oder Heißwasser, soweit erhitzt werden, dass anschließend dieses Wasser zur Vorwärmung der Würze eine ausreichende Anfangstemperatur aufweist. Entsprechend der Temperatur des Wassers aus dem Energiespeicher ist dann ein geringerer Bedarf an Zusatzwärme zur Aufheizung des Würze während des Vorwärmens der Würze auf die gewünschte Vorwärmtemperatur erforderlich, da ein Teil der Wärme aus dem Energiespeicher rückgewonnen wird.

Nach einer bevorzugten Variante ist der Druck der Würze in der Vorwärmeinrichtung zumindest in bestimmten Prozessabschnitten, insbesondere zu Beginn des Einströmens der Würze in die Würzekocheinrichtung, höher als der Druck der Würze in der Würzekocheinrichtung. Dadurch wird erreicht, dass die Würze beim Einströmen in die Würzekocheinrichtung expandiert, so dass bereits in dieser Prozessphase ein Teil des in der Würze enthaltenen Wassers verdampft und bereits eine gewünschte Stoffumsetzung der Würzeinhaltsstoffe zumindest teilweise erfolgt. Dadurch kann zum einen die anschließende Kochzeit weiter verkürzt werden und zum anderen wird in gewünschter Weise sehr schnell die Luft aus der Würzekocheinrichtung verdrängt.

Ein weiterer Teilaspekt der Erfindung betrifft das Vorkühlen der Würze nach der Würzekochung und vor der Abtrennung des Heißtrubes in einer Trubentfernungseinrichtung , beispielsweise einem Whirlpool. Durch die unmittelbare Abkühlung der Würze noch vor der Abtrennung des Heißtrubes kann die thermische Belastung der Würze reduziert und dadurch können ihre technologischen Eigenschaften verbessert werden.

Selbstverständlich kann die Vorkühlung der Würze anschließend an beliebige Würzekochverfahren durchgeführt werden. Besondere Vorteile bietet jedoch die Kombination aus Würzevorkühlung und die vorhergehende Würzekochung unter Verfahrensbedingungen der dynamischen Niederdruckkochung mit wechselnden Druckaufbau- und Druckentlastungsphasen. Denn durch diese Art der Würzekochung werden in der Würze Eiweißstrukturen gebildet, die trotz der Absenkung der Würzetemperatur nach der Vorkühlung auf beispielsweise circa 88°C bis 90°C in der nachfolgenden Heißtrubabscheidung effektiv abgeschieden werden können.

Die Vorkühlung der Würze kann in konventioneller Weise in einem der Würzekocheinrichtung nachgeordneten Wärmetauscher erfolgen. Wird dieser Wärmetauscher sekundärseitig von frischem Brauwasser durchströmt, wobei dabei die bei der Abkühlung der Würze anfallende Wärme in das Brauwasser eingekoppelt wird, kann die Prozessenergie optimiert genutzt werden.

Eine Ausführungsform der Erfindung ist in der Zeichnung dargestellt und wird nachfolgend beispielhaft erläutert.

Es zeigen:
- **Fig. 1**: in schematischer, teilweise geschnittener seitlicher Ansicht einen Innenkocher;
- **Fig. 2**: das Schema eines Teils einer Sudhausanlage zur Würzeherstellung mit Würzevorwärmung;
- **Fig. 3**: das Schema einer zweiten Ausführungsform eines Teils einer Sudhausanlage zur Würzeherstellung mit Würzevorwärmung;

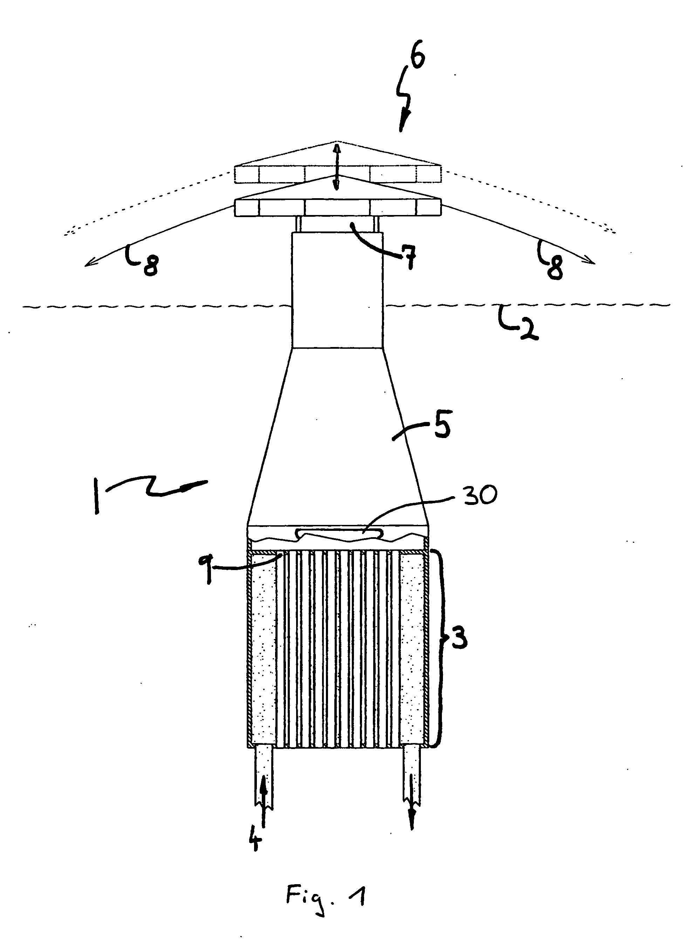

Der in der **Fig. 1** schematisch und nicht maßstabsgerecht dargestellte Innenkocher 1 befindet sich im Innenbereich einer nicht eigens abgebildeten Sudpfanne, welche die zu siedende Flüssigkeit, insbesondere die Bierwürze, enthält, was durch den Flüssigkeitsspiegel 2 angedeutet ist.

In zunächst an sich bekannter Weise umfasst der erfindungsgemäße Innenkocher 1 einen Wärmetauscher 3, der im dargestellten Ausführungsbeispiel als mantelseitig mit Dampf 4 oder Heißwasser beheizter Rohrbündelwärmetauscher ausgebildet ist, einen Staukonus 5 zur Bündelung und Leitung des am oberen Ende des Wärmetauschers 3 austretenden Würzestroms sowie einen Würzeverteilschirm 6, der den bei 7 nach senkrecht oben austretenden, dort im allgemeinen zweiphasigen Würzestrom umlenkt und ihn schirmartig verteilt wieder auf den Flüssigkeitsspiegel 2 zurückleitet, wie dies die Strömungspfeile 8 andeuten. Dabei ist der Würzeverteilschirm 6 des Innenkochers 1 erfindungsgemäß in seiner Höhe kontrolliert veränderbar, wodurch insbesondere die Charakteristik der beim Sieden entstehenden Naturumlaufströmung gesteuert und verändert werden kann. In den Seitenwänden des Innenkochers 1 sind Entlastungsöffnungen 30 vorgesehen, die die Ausbildung einer Naturumlaufströmung beim Aufheizen der Würze 11 erleichtern.

Eine erfindungsgemäß automatische Regulierung der Höhe des Würzeverteilschirms 6 kann beispielsweise dadurch erfolgen, dass zunächst mittels geeigneter, in der **Fig. 1** nicht dargestellter Sensoren beispielsweise die Höhe des Flüssigkeitsspiegels 2, die Temperatur der sekundärseitig bei 9 den Wärmetauscher durchströmenden Würze und/oder Druck oder Temperatur eines primärseitig den Wärmetauscher 3 durchströmenden Wäzmeträgermediums 4 ermittelt werden, dass weiterhin aus dem oder den ermittelten Messwerten ggf. unter zusätzlicher Heranziehung einer gespeicherten rechnerischen und/oder statistischen Beziehung ein Steuerungswert gebildet wird, anhand dessen schließlich die Höhenposition des Würzeverteilschirms 6 mittels eines nicht gezeichneten, beispielsweise elektrischen, pneumatischen oder hydraulischen Antriebs verstcllt wird.

Befindet sich der Würzeverteilschirm 6 beispielsweise in seiner untersten Stellung, so wird einerscits bei 7 ein Staudruck aufgebaut, der der aus dem Staukonus 5 austretenden Würzestzömung entgegenwirkt. Andererseits ist in dieser Stellung des Würzeverteilschirms 6 die Größe des schirmartigen Bereichs 8 des Würzestroms und damit die Verdampfungsgeschwindigkeit der Würze minimiert. Dabei wirkt einerseits der bei 7 aufgebaute Staudruck unmittelbar dämpfend auf die Würzeströmung, wodurch sich die Entstehung unerwünschten Pulsierens bereits unterdrücken lässt; andererseits führen die in der untersten Stellung des Würzeverteilschirms 6 minimierte Fläche des schirmartigen Bereichs 8 des Würzestroms und die dadurch ebenfalls minimierte Würzeverdampfung durch das Ausströmen der Würze 11 aus den Entlastungsöffnungen 30 zu einem schnelleren Aufheizen der in der Sudpfanne befindlichen Würzemenge 2, was beim Anfahren des Siedevorgangs zur Verkürzung instationärer Phasen beiträgt und daher im Sinne der Vermeidung des unerwünschten Pulsierens von Vorteil ist.

In der höchsten Stellung des Würzeverteilschirms 6 hingegen ist die Staudruckwirkung auf den Würzestrom bei 7 minimiert und der schirmartige Bereich 8 der Würzeströmung weist bis zum Auftreffen auf den Flüssigkeitsspiegel 2 einen maximalen Durchmesser und damit eine maximale Fläche sowie maximale Verdampfungswirkung auf.

Durch Einstellen des Würzeverteilschirms 6 auf zwischen der obersten und der untersten Position befindliche Zwischenstellungen können Staudruckwirkung und Verdampfungsgeschwindigkeit auf entsprechende Zwischenwerte einreguliert werden. Auf diese Weise lässt sich in allen beim Siedeprozess auftretenden Betriebszuständen auf Charakteristik und Stärke der Würzeströmung Einfluss nehmen, wodurch das unerwünschte Pulsieren der Naturumlaufströmung in seinem Ausmaß verringert oder sogar gänzlich vermieden werden kann, was wiederum der sensorischen Qualität dergestalt erzeugter Biersorten besonders förderlich ist.

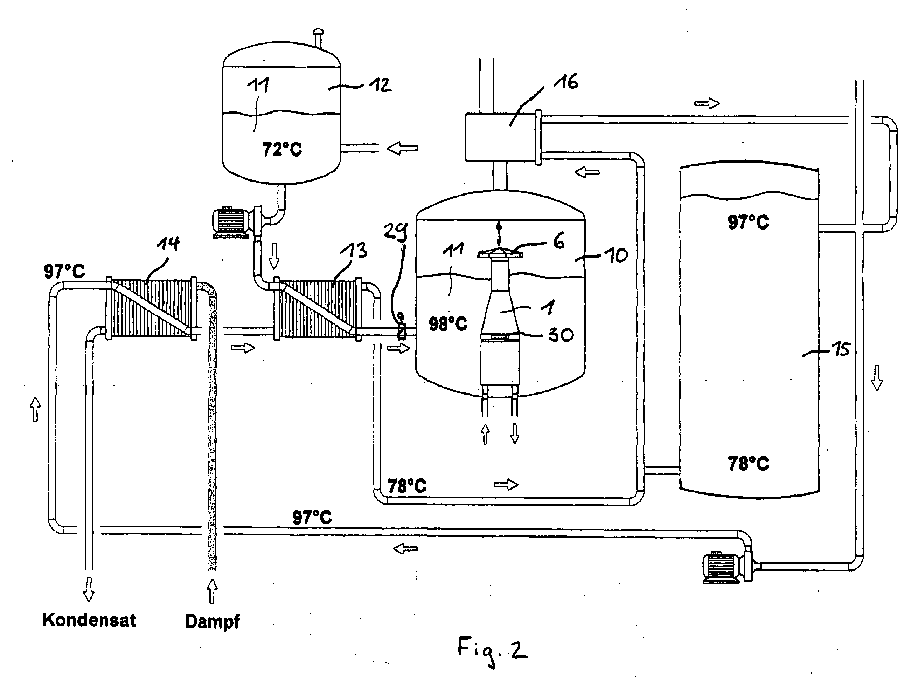

Bei der in **Fig. 2** dargestellten Anlage dient eine Würzepfanne 10 mit dem in **Fig. 1** beschriebenen Innenkocher 1 dem Kochen von Würze 11. Die Würze 11 wird vor dem Würzekochen in einem Würzevorlauftank 12 zwischengespeichert und mittels einer Pumpe in die Würzepfanne 10 übergepumpt. Die Würze hat bei der dargestellten Ausführungsform im Würzevorlauftank 12 eine Temperatur von beispielsweise circa 72°C.

Beim Umpumpen der Würze 11 vom Würzevorlauftank 12 in die Würzepfanne 10 durchströmt die Würze 11 einen Wärmetauscher 13 sekundärseitig. Der Wärmetauscher 13 wird seinerseits primärseitig von Heißwasser durchströmt. Der Wärmetauscher 13 und die Einlauftemperatur des Heißwassers sind dabei so ausgelegt, dass die Würze 11 sekundärseitig möglichst schnell im Durchlauf durch den Wärmetauscher 13 von 72° C auf 98°C aufgeheizt wird. Im Ergebnis strömt die Würze 11 also bereits mit einer Temperatur von 98°C in die Würzepfanne 10 ein, so dass beim Aufheizen der Würze 11 in der Würzepfanne 10 bis zum Erreichen der Siedetemperatur bei 100°C lediglich eine kleine Temperaturdifferenz von 2°C überwunden werden muss.

Um die für die Vorwärmung der Würze 11 erforderliche Wärme zur Verfügung stellen zu können, wird der Wärmetauscher 13 primärseitig mit Heißwasser durchströmt, das beim Einlauf eine ausrechend hohe Temperatur aufweisen muss. Zur Erwärmung dieses Heißwassers auf die erforderliche Temperatur dient ein weiterer Wärmetauscher 14, in den der Wärmeträger sekundärseitig einströmt. Der Wärmetauscher 14 ist dabei derart ausgelegt, dass der sekundärseitig durchströmende Wärmeträger ausreichend hoch aufgeheizt wird. Die dafür erforderliche Wärme wird durch Dampf oder Heißwasser zur Verfügung gestellt, der den Wärmetauscher 14 primärseitig durchströmt.

Zur Schaffung eines geschlossenen Wärmeträgerkreislaufes und einer optimalen Nutzung der im Prozess befindlichen Wärme dient ein Verdrängungsspeicher 15, der zur Energiespeicherung mit Heißwasser gefüllt wird. Der Verdrängungsspeicher 15 bildet zusammen mit einem Pfannendunstkondensator 16 ein Energierückgewinnungssystem, mit dem die beim Würzekochen entstehende Abwärme, die im ausdampfenden Brüden enthalten ist, zurückgewonnen wird. Mit der im Pfannendunstkondensator 16 aus dem Brüdendampf rückgewonnenen Wärme wird das im oberen Teil des Verdrängungsspeicher 15 stehende Wasser auf beispielsweise 97°C aufgeheizt. Im Ergebnis kann dadurch erreicht werden, dass das aus dem Wärmetauscher 13 zurückstrtimende Wasser mit einer Temperatur von beispielsweise 78°C an der Unterseite des Verdrängungsspeichers 15 eingespeist wird und an der Oberseite des Verdrängungsspeicher 15 Heißwasser mit einer Wassertemperatur von 97°C entnommen werden kann. Dieses aus dem Verdrängungsspeicher 15 entnommene Heißwasser wird dann wiederum primärseitig in den Wärmetauscher 14 eingespeist, so dass im Ergebnis nur relativ geringe Zusatzwärme in Form von Dampf oder Heißwasser erforderlich ist, um das Wasser auf die Temperatur zu erhitzen, die zur Beheizung des Wärmetauschers 13 bei der Vorwärmung der Würze 11 erforderlich ist.

In der Leitung zwischen Wärmetauscher 13 und Würzekocheinrichtung 10 ist eine Drosselklappe 29 eingebaut, mit der die Druckdifferenz zwischen dem Druck der Würze 11 in der Vorwärmeinrichtung 13 und dem Druck der Würze 11 in der Würzekocheinrichtung 10 eingestellt werden kann.

Wird die Würze im Innenkocher 1 unter den bekannten Verfahrensbedingungen einer dynamischen Niederdruckkochung mit wechselnden Druckaufbau- und Druckentlastungsphasen gekocht, kann im Zusammenwirken mit dem verstellbaren Würzeverteilschirm 6 und der Würzevorwärmung eine sehr niedrige Gesamtverdampfung im Bereich von 3,5% bis 4% erreicht werden, wodurch im Ergebnis Heizenergie eingespart wird. Die Brüdendampfemission wird zugleich minimiert und die technologischen Eigenschaften der Würze werden durch die bei der dynamischen Niederdruckkochung mögliche Gaswäsche (Stripping) durch Bildung von Expansionsdampf verbessert. Außerdem ist es durch die erfindungsgemäße Merkmalskombination möglich, bei der Niederdruckkochung mit sehr geringen Überdrücken, beispielsweise einem Überdruck von lediglich bis zu 0,3 bar, zu arbeiten.

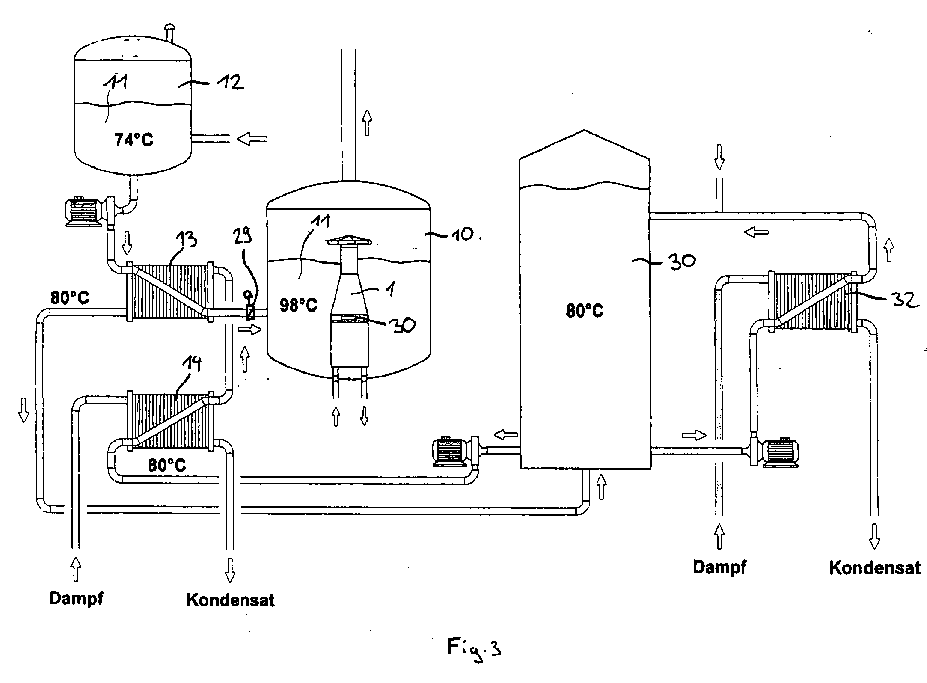

Die in Fig. 3 dargestellte Anlage entspricht in wesentlichen Merkmalen dem Aufbau der in Fig. 2 dargestellten Anlage. Wiederum dient eine Würzepfanne 10 mit einem Innenkocher 1 der Kochung der Würze 11. Beim Umpumpen der Würze 11 vom Würzevorlauftank 12 in die Würzepfanne 10 durchströmt die Würze 11 den Wärmetauscher 13 an dessen Sekundärseite. Der Wärmetauscher 13 wird seinerseits primärseitig von Heißwasser mit einer ausreichend hohen Einlauftemperatur durchströmt. Der Wärmetauscher 13 und die Einlauftemperatur des Heißwassers sind dabei so ausgelegt, dass die Würze 03 sekundärseitig von beispielsweise 74° C auf beispielsweise 98°C aufgeheizt wird. Im Ergebnis strömt die Würze 11 also mit einer Temperatur von 98°C in die Würzepfanne 10 ein, so dass beim Aufheizen der Würze 11 in der Würzepfanne 10 bis zum Erreichen der Siedetemperatur bei 100°C lediglich eine kleine Temperaturdifferenz von beispielsweise 2°C überwunden werden muss.

Zur Aufheizung des beim Beheizen des Wärmetauschers 13 erforderlichen Heißwassers dient auch bei dieser Ausführungsform ein Wärmetauscher 14, der primärseitig von Dampf durchströmt wird. Im Ergebnis kann dadurch das sekundärseitig mit 80°C in den Wärmetauscher 06 einströmende Heißwasser soweit aufgeheizt werden, dass es eine ausreichend hohe Einlauftemperatur beim Einströmen in den Wärmetauscher 13 hat. Ein Heißwassertank 31 dient als Energiezwiscbenspeicher, in dem das Heißwasser bei einer Temperatur von circa 80°C zwischengespeichert werden kann. Das heißt das Heißwasser, das den Wärmetauscher 14 sekundärseitig und den Wärmetauscher 13 primärseitig durchströmt, kann im Heißwassertank 31 unter Schließung eines geschlossenen Wärmeträgerkreislaufes zwischengespeichert werden. Um die Wassertemperatur im Heißwassertank 31 konstant auf circa 80°C halten zu können, kann das Heißwasser mittels eines Wärmetauschers 32 unter Einsatz von Dampf aufgeheizt werden.

## Patentansprüche

1. Anlage zur Würzekochung mit einer Würzekocheinrichtung (10), insbesondere einer Würzepfanne, und einem darin integrierten Kocher, mit einem beheizbaren Wärmetauscher zur Wärmeeinkopplung in die im Naturumlauf zirkulierende Würze (11), wobei der Würzekocheinrichtung (10) eine Vorwärmeinrichtung (13) zur Vorwärmung der in die Würzekocheinrichtung (10) einzubringenden Würze (11) vorgeschaltet ist,
**dadurch gekennzeichnet,**
**dass** die Würze (11) mit der Vorwärmeinrichtung (13) auf eine Vorwärmtemperatur aufgeheizt wird, die maximal 1 bis 2°C unterhalb der Siedetemperatur der Würze (11) liegt, wobei die Vorwärmeinrichtung zumindest einen ersten Wärmetauscher (13) aufweist, in den primärseitig Heißwasser mit einer Einlauftemperatur oberhalb der gewünschten Vorwärmtemperatur der Würze (11) einströmt, wobei der erste Wärmetauscher (13) sekundärseitig von der vorzuwärmenden Würze (11) im Durchlauf durchströmt wird, und wobei dem ersten Wärmetauscher (13) ein zweiter Wärmetauscher (14) vorgeschaltet ist, in dem das HeiBwassers zur Beheizung des ersten Wärmetauschers (13) sekundärseitig aufgeheizt wird, und wobei in den zweiten Wärmetauscher (14) primärseitig Dampf oder Heißwasser einströmt, und wobei die Energiedichte des primärseitig in den zweiten Wärmetauscher (14) einströmenden Dampfs oder Heißwassers so hoch ist, dass das den zweiten Wärmetauscher (14) sekundärseitig durchströmende Heißwasser mit einer Temperatur in den nachgeschalteten ersten Wärmetauscher (13) überströmt, die der gewünschten Einlauftemperatur am ersten Wärmetauscher (13) entspricht.

2. Anlage nach Anspruch 1,
**dadurch gekennzeichnet,**
**dass** zwischen Vorwärmeinrichtung (13) und Würzekocheinrichtung (10) ein Druckerhöhungsorgan (29), insbesondere eine Drosselklappe, angeordnet ist, mit der die Druckdifferenz zwischen dem Druck der Würze (11) in der Vorwärmeinrichtung (13) und dem Druck der Würze (11) in der Würzekocheinrichtung (10) eingestellt werden kann.

3. Anlage nach Anspruch 1 oder 2,
**dadurch gekennzeichnet,**
**dass** die Vorwärmeinrichtung zumindest einen Freistromplatten-Wärmetauscher aufweist.

4. Anlage nach einem der Ansprüche 1 bis 3,
**dadurch gekennzeichnet,**
**dass** die Vorwärmeinrichtung zumindest zwei in Reihe und/oder parallel durchströmbare Wärmetauscher aufweist.

5. Anlage nach Anspruch 4,
**dadurch gekennzeichnet,**
**dass** die Würzeströmung durch die in Reihe und/oder parallel durchströmbaren Wärmetauscher durch wahlweise Zu- oder Abschaltung einzelner Wärmetauscher oder Wärmetauschergruppen verändert werden kann.

6. Anlage nach einem der Ansprüche 1 bis 5,
**dadurch gekennzeichnet,**
**dass** dem zweiten Wärmetauscher (14) eine Energierückgewinnungseinrichtung (15, 16) vorgeschaltet ist, mit dem der primärseitig in den zweiten Wärmetauscher einströmenden Wärmeträger **dadurch** vorgewärmt werden kann, dass die bei der Würzekochung entstehende Abwärme in den Wärmeträger eingekoppelt wird.

7. Anlage nach einem der Ansprüche 1 bis 6,
**dadurch gekennzeichnet,**
**dass** zwischen der Würzekocheinrichtung (10) und vor einer Trubentfernungseinrichtung (17), beispielsweise einem Whirlpool, in der der Heißtrub (21) aus der Würze (11) entfernt werden kann, eine Kühleinrichtung (23, 25) angeordnet ist, mit der die Würze (11) nach der Würzekochung und vor der Abtrennung des Heißtrubes (21) zumindest geringfügig abgekühlt werden kann.

8. Anlage nach Anspruch 7,
**dadurch gekennzeichnet,**
**dass** die Kühleinrichtung in der Art eines der Würzekocheinrichtung (10) nachgeordneten Wärmetauschers (25), insbesondere in der Art eines Freistromplatten-Wärmetauschers, ausgebildet ist.

9. Anlage nach Anspruch 8,
**dadurch gekennzeichnet,**
**dass** der Wärmetauscher (25) sekundärseitig von frischem Brauwasser durchströmt wird, in das die bei der Abkühlung der Würze (11) anfallende Wärme eingekoppelt wird.

## Claims

1. Unit for boiling wort with a wort boiling device (10), in particular a wort copper and a boiler integrated therein, with a heat exchanger which may be heated for coupling heat into the wort (11), circulating by means of natural circulation, a pre-heating device (13) for pre-heating the wort (11) to be introduced into the wort boiling device (10) being connected upstream of the wort boiling device (10),
**characterised in that**
the wort (11) is heated by the pre-heating device (13) to a pre-heat temperature which is a maximum of 1 to 2° C below the boiling point of the wort (11), the pre-heating device comprising at least a first heat exchanger (13), into which hot water flows on the primary side at an inlet temperature above the desired pre-heat temperature of the wort (11), the first heat exchanger (13) on the secondary side being traversed by the wort (11) to be pre-heated during flow-through and a second heat exchanger (14) being connected upstream of the first heat exchanger (13) and in which the hot water is heated on the secondary side to heat the first heat exchanger (13) and vapour or hot water flowing into the second heat exchanger (14) on the primary side and the energy density of the vapour or hot water flowing into the second heat exchanger (14) on the primary side being so high that the hot water traversing the second heat exchanger (14) on the secondary side flows over into the first downstream heat exchanger (13) at a temperature which corresponds to the desired inlet temperature at the first heat exchanger (13).

2. Unit according to claim 1,
**characterised in that**
a pressure increase device (29), in particular a throttle valve, is arranged between the pre-heating device (13) and wort boiling device (10) and with which the pressure difference between the pressure of the wort (11) in the pre-heating device (13) and the pressure of the wort (11) in the wort boiling device (10) may be adjusted.

3. Unit according to claim 1 or 2,
**characterised in that**
the pre-heating device comprises at least one free flow plate heat exchanger.

4. Unit according to any one of claims 1 to 3,
**characterised in that**
the pre-heating device comprises at least two heat exchangers which may be traversed in series and/or in parallel.

5. Unit according to claim 4,
**characterised in that**
the flow of wort through the heat exchangers, which may be traversed in series and/or in parallel, may be altered by optionally connecting or disconnecting individual heat exchangers or groups of heat exchangers.

6. Unit according to any one of claims 1 to 5,
**characterised in that**
an energy recovery device (15, 16) is connected upstream of the second heat exchanger (14), and with which the heat transfer medium flowing into the second heat exchanger on the primary side may be pre-heated, by the waste heat produced during wort boiling being coupled into the heat transfer medium.

7. Unit according to any one of claims 1 to 6,
**characterised in that**
a cooling device (23, 25) is arranged between the wort boiling device (10) and upstream of a trub removal device (17), for example a whirlpool, in which the hot trub (21) may be removed from the wort (11), and by means of which cooling device the wort (11) may be cooled at least slightly after wort boiling and before the separation of the hot trub (21).

8. Unit according to claim 7,
**characterised in that**
the cooling device in the manner of a heat exchanger (25) arranged downstream of the wort boiling device (10) is configured, in particular, in the manner of a free flow plate heat exchanger.

9. Unit according to claim 8, **characterised in that** the heat exchanger (25) on the secondary side is traversed by fresh brewing water, into which the heat accumulated by cooling the wort (11) is coupled.

## Revendications

1. Dispositif de cuisson de moût comportant un dispositif de cuisson de moût (10), notamment une chaudière à moût, et un bouilleur intégré dedans, comportant un échangeur de chaleur pouvant être chauffé pour intégrer de la chaleur dans le moût circulant en circuit naturel (11), dans lequel est installé, en amont du dispositif de cuisson de moût (10), un dispositif de préchauffage (13) pour préchauffer le moût (11) à incorporer dans le dispositif de cuisson de moût (10),
**caractérisé en ce que**
le moût (11) est chauffé à l'aide du dispositif de préchauffage (13) à une température de préchauffage qui se situe au maximum 1 à 2° C en dessous de la température d'ébullition du moût (11), le dispositif de préchauffage comportant au moins un premier échangeur de chaleur (13) dans lequel afflue au niveau primaire de l'eau chaude à une température d'entrée supérieure à la température souhaitée de préchauffage du moût (11), le moût à préchauffer (11) passant au niveau secondaire en circuit dans le premier échangeur de chaleur (13), et étant installé en amont du premier échangeur de chaleur (13) un deuxième échangeur de chaleur (14) dans lequel l'eau chaude servant à chauffer le premier échangeur de chaleur (13) est chauffée au niveau secondaire et de la vapeur ou de l'eau chaude afflue au niveau primaire dans le deuxième échangeur de chaleur (14) et la densité énergétique de la vapeur ou de l'eau chaude affluant au niveau primaire dans le deuxième échangeur de chaleur (14) étant assez élevée pour que l'eau chaude passant au niveau secondaire dans le deuxième échangeur de chaleur (14) déborde dans le premier échangeur de chaleur (13) installé en aval à une température qui équivaut à la température souhaitée d'entrée au niveau du premier échangeur de chaleur (13).

2. Installation selon la revendication 1,
**caractérisée en ce que**,
entre le dispositif de préchauffage (13) et le dispositif de cuisson de moût (10), est disposé un organe d'augmentation de pression (29), notamment un étrangleur qui permet de régler la différence de pression entre la pression du moût (11) dans le dispositif de préchauffage (13) et la pression du moût (11) dans le dispositif de cuisson de moût (10).

3. Installation selon la revendication 1 ou 2,
**caractérisée en ce que**
le dispositif de préchauffage comporte au moins un échangeur de chaleur à plaque à tourbillon.

4. Installation selon une des revendications 1 à 3,
**caractérisée en ce que**
le dispositif de préchauffage comporte au moins deux échangeurs de chaleur où la circulation peut se faire en série et/ou parallèlement.

5. Installation selon la revendication 4,
**caractérisée en ce que**
le flux de moût dans les échangeurs de chaleur où la circulation peut se faire en série et/ou parallèlement peut être modifié au choix par activation ou désactivation des différents échangeurs de chaleur ou groupes d'échangeurs de chaleur.

6. Installation selon une des revendications 1 à 5,
**caractérisée en ce que**,
en amont du deuxième échangeur de chaleur (14) est installé un dispositif de recyclage d'énergie (15, 16) qui permet de préchauffer le caloriporteur affluant au niveau primaire dans le deuxième échangeur de chaleur en intégrant dans le caloriporteur la chaleur dégagée se formant lors de la cuisson du moût.

7. Installation selon une des revendications 1 à 6,
**caractérisée en ce que**,
entre le dispositif de cuisson de moût (10) et en amont d'un dispositif d'enlèvement de la lie (17), par exemple un tourbillon, dans lequel la lie chaude (21) peut être éliminée du moût (11), est disposé un dispositif de refroidissement (23, 25) qui permet de refroidir du moins légèrement le moût (11) après sa cuisson et avant l'enlèvement de la lie chaude (21).

8. Installation selon la revendication 7,
**caractérisée en ce que**
le dispositif de refroidissement est réalisé à la manière d'un échangeur de chaleur (25) installé en aval du dispositif de cuisson de moût (10), notamment à la manière d'un échangeur de chaleur à plaque à tourbillon.

9. Installation selon la revendication 8,
**caractérisée en ce que**
dans l'échangeur de chaleur (25) passe au niveau secondaire de l'eau de brassage fraîche dans laquelle est incorporée la chaleur incidente lors du refroidissement du moût (11).
